# EUROPEAN PATENT SPECIFICATION

(11) **EP 4 343 288 B1**
(45) Date of publication and mention of the grant of the patent: **23.07.2025**
(21) Application number: 23197513.7
(22) Date of filing: 14.09.2023
(51) Int. Cl.: G01G 21/23, G01G 21/22

(54) **FLOOR SCALE WITH CLEANABLE FOOTPRINT**
BODENWAAGE MIT REINIGBARER STANDFLÄCHE
BALANCE DE SOL AVEC EMPREINTE NETTOYABLE

(30) Priority: 22.09.2022 CN 202211157208; 22.09.2022 US 202217950220
(43) Date of publication of application: 27.03.2024
(73) Proprietor: Mettler-Toledo, LLC, Columbus OH 43240 (US)
(72) Inventor: Mastenbrook, Joshua, Lancaster (US); Bayer, Jason, Columbus (US); Hui, Huaqiang, Changzhou (CN); Schilling, Thomas Johannes, Albstadt (DE); Chen, Dengyou, Changzhou (CN)
(74) Representative: Mettler-Toledo

(56) References cited:
- DE-A1- 10 038 443
- DE-B4- 102017 130 305
- US-A- 5 637 837

## Description

### Technical Field

The present invention relates to the field of weighing and particular to floor-based scales that are used in processing environments where access to the surfaces of the floor scale and its surroundings for cleaning is critical. The weight, geometry and proximity to the ground of a floor scale have rendered hygienic cleaning of such devices difficult, and, in some instances, unsafe, especially when access to the footprint below the scale is required. The disclosed invention is directed to providing a floor scale with surfaces and surroundings that may be safely and effectively accessed without adversely affecting the ability to accurately and reliably perform the weighing task.

### Background Art

A number of types of heavy-duty scales are used in industrial weighing. In some situations, the scale can be a portable scale, having casters or similar means that facilitates moving the scale to a point of use, but this mobility generally comes at the price of raising the weighing surface. In another situation, a portable scale uses a forked load platform in the nature of a pallet jack. Such a scale may be useful, but only when the target load is already on a pallet. As the mass and volume of the target load increases, the required load platform increases in both footprint area and in thickness. The load platform needs to be arranged in a structure proximate to a floor, with the structure providing a base for the plurality of load cells on which the load platform bears. In many of these situations, the structure is mounted to the floor for stability. This is the weighing system referred to in this application as a floor scale.

In some industries, the environment in which the floor scale is used does not require frequent "wash down" or "wipe down" cleaning. However, there are a number of industries where cleanliness is paramount. Recent concerns with surface transmission during the early days of the coronavirus accentuated the known concerns about sanitation, decontamination and avoidance of cross contamination. For purpose of illustration only, such industries include food processing, pharma and bio processing.

At least one piece of prior art, US Pat. 5,359,153, is directed at a portable, clean-in-place industrial floor scale. However, the approach taken there is to reduce the weight of the load platform. While this may make the load platform lighter, it also reduces the maximum capacity of the scale.

Besides cleaning the top of the load platform and the surrounding structure, there is a need to be able to safely raise the load platform from its horizontal operating position to clean the footprint on which it is mounted. DE 10 2017 130 305 B4 discloses a scale comprising a weighing platform and a lifting device configured to pivot the scale with little effort and with reduced twisting from an operating position into a cleaning position. It may also be necessary to minimize the amount of surface where liquids may pool and present a growth medium for bacteria and the like. A further floor scale is disclosed in DE 100 38 443 A1.

It is an unmet object of the prior art to meet these requirements.

### Summary of the Invention

These objects are met by a floor scale having the inventive concept embodied therein. Such a floor scale is configured to allow cleaning of both the floor scale and a footprint of the floor scale on a floor on which the floor scale is arranged. The floor scale comprises a load platform having an upper surface for receiving a load to be weighed, a frame supporting the load platform above the floor and a pair of foot assemblies, each of which is connected to the frame for pivoting the load platform about an axis between an operative position in which the upper surface is substantially parallel to the floor and a non-operative position in which the upper surface is angled obliquely relative to the floor.

In such a floor scale, the load platform is preferably rectangular, and, more preferably, square. In such a floor scale, the load platform may comprise or be a rectangular solid wherein the upper surface typically has an area of from about 400 to about 5000 in² and the load platform typically weighs from about 120 to about 600 lb.

The frame comprises a rear frame member and a pair of side frame members. Each side frame member of the pair of side frame members is attached to opposite ends of the rear frame member. The rear frame member comprises a bar, in particular a cylindrical bar having a first end and a second end. Then, a first side frame member of the pair of side frame members is attached to the first end of the bar, and a second side frame member of the pair of side frame members is attached to the second end of the bar. The rear frame member forms a rear edge of the frame and the pair of side frame members form side edges, in particular opposite side edges, of the frame. The side frame members may be according to any embodiment disclosed below. In particular, the side frame members comprise at least one bar and at least one vertical plate according to any embodiment disclosed below. In particular, the vertical plate may comprise the at least two apertures positioned to receive a locking pin.

The frame comprises further a front frame member, wherein each side frame member of the pair of side frame members is attached to the respective front and rear frame members to define a rectangular frame having front, rear and side edges and four corners. The frame also has a plate, at a lower portion of each of the four corners. The load platform bears upon these plates In many embodiments, these plates are with an aperture in each establishing a force communication with the floor only when the load platform is in the operative position. Also the front member comprises a bar, in particular a cylindrical bar. and the side frame members comprise bars, in particular cylindrical bars, and vertical plates, Accumulation of liquids can be minimized by the front and rear frame members comprising bars, in particular cylindrical bars, and the side frame members comprising bars, in particular cylindrical bars, and vertical plates.

In many embodiments and independent of the concrete realization of the frame, the foot assemblies, in particular each of the foot assemblies, comprise a first foot, connected to the frame near the rear edge of the frame, establishing the axis for pivoting the frame, a second foot, spaced apart from the first foot, and a bar, in particular a cylindrical bar, offset from the floor and aligned along the side edge (the corresponding side edge, as the case may be) of the frame, in particular if the load platform is in the operative position, holding the first foot and second foot in spaced-apart relationship. The bar may be parallel to the side edge, in particular in embodiments of the floor scale comprising a rectangular frame that may be given by the relative arrangement of a front frame member, a rear frame member and a pair of side frame members, as disclosed above.

In an embodiment, each first foot and second foot is adapted to be anchored to the floor by a means for fastening.

Independent of the concrete realization of the embodiment of the floor scale comprising foot assemblies with a first foot, a second foot and a bar, for each of the foot assemblies, the second foot and the corresponding side frame member may provide anchor points for applying torque to the frame above the axis.

The floor scale according to any embodiment disclosed may further comprise a means for locking the load platform in the operative position and in at least one non-operative position.

In embodiments of the floor scale comprising a pair of foot assemblies with a first foot and a frame with a pair of side frame members, the means for locking may comprise a spring-loaded locking pin arranged in the first foot; and at least two apertures in the corresponding side frame member, the first of the apertures positioned to receive the locking pin when the load platform is in the operative position and each of the further apertures positioned to receive the locking pin when the load platform is in one of the at least one non-operative positions.

The floor scale according to any embodiment disclosed may further comprise means for applying torque to the frame above the axis. The means may be a hydraulic cylinder in many embodiments. In particular in embodiments of the floor scale comprising a pair of foot assemblies with a first foot, a second foot and a bar, and a frame with a pair of side frame members, the floor scale may further comprise, for each foot assembly, a hydraulic cylinder having a first end mounted to the second foot and a second end mounted to the corresponding side frame member. A cylinder body of the hydraulic cylinder may then be mounted to the second foot. In embodiments comprising a hydraulic cylinder, a rod/piston of the hydraulic cylinder is in a retracted position when the load platform is in the operative position and in an extended position when the load platform is in the non-operative position.

In the floor scale according to any embodiment disclosed, all surfaces of the frame and foot assemblies may be substantially devoid of concave horizontal surfaces.

### Brief Description of the Drawings

The above and other features, properties and advantages of the present invention will become clearer based on the description below in conjunction with the accompanying drawings and embodiments, and the same features are always indicated by the same reference numerals in the figures, in which:
**FIGS. 1A** and **1B** are perspective views of an embodiment of the floor scale having the inventive concept, with Fig. 1A showing the embodiment in an operative position and Fig. 1B showing the embodiment in a raised position;
**FIGS. 2A** and **2B** are front elevation views of the floor scale of Figs. 1A and 1B, with Fig. 2A showing the floor scale in the operative position and Fig. 2B showing the floor scale in the raised position, with a central portion of the width removed;
**FIG. 3A** and **3B** are right-side elevation views of the floor scale, with Fig. 3A showing the floor scale in the operative position and Fig. 2B showing the floor scale in the raised position; and
**FIG. 4** is an enlarged perspective view of a vertical plate of each side frame member.

### Detailed Description of Embodiments

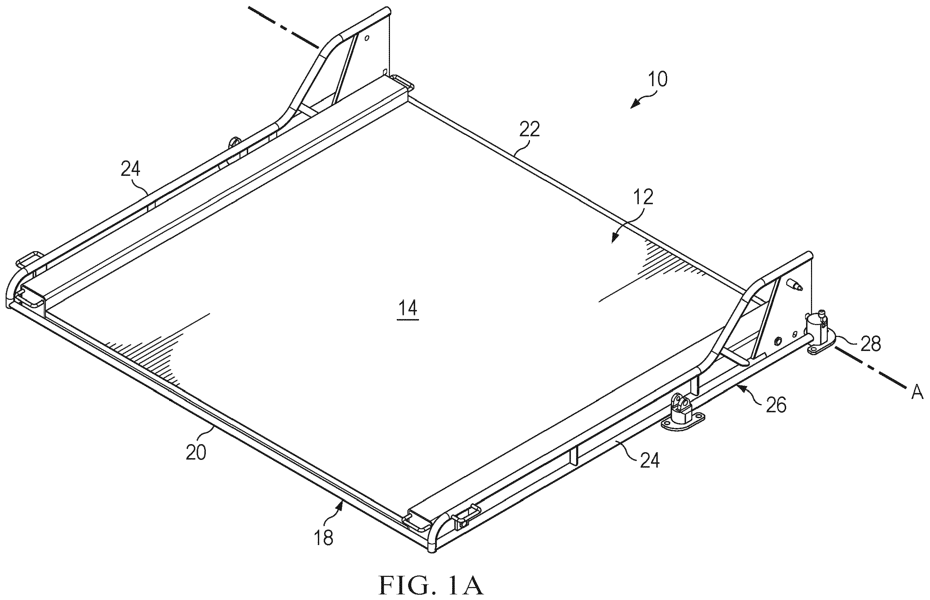

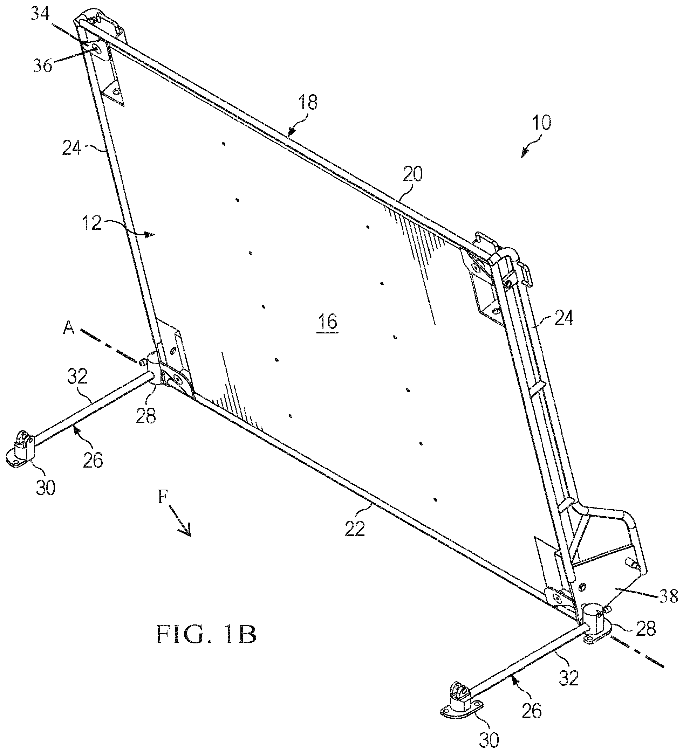

An embodiment of a floor scale 10 incorporating the inventive concept is depicted in perspective views in FIG. 1A and 1B. The floor scale 10 is particularly configured to allow the cleaning of both the floor scale and a footprint F of the floor scale on the floor beneath floor scale. In Fig. 1A, the footprint is not visible, as the floor scale 10 is shown in an operative condition, in which a load platform 12 of the floor scale is positioned substantially horizontally for receiving a load to be weighed. In Fig. 1B, the load platform 12 is in a raised non-operative condition that provides access to many of the surfaces of the floor scale 10, as well as to the floor or base surface on which the floor scale is placed, particularly the footprint F beneath the load platform. For purposes of this specification, the footprint F refers to the portion of the floor that is beneath the load platform 12 when in the operative condition.

The load platform 12 is a vital aspect of the floor scale 10, depicted in all views, but not readily apparent in some of the views. The load platform 12 in a typical floor scale 10 will be a rectangular metal plate, preferably a square plate. In a typical embodiment, an upper surface 14 of the load platform 12 will be planar, as seen in Fig. 1A, to facilitate positioning of a load being weighed by the floor scale 10. Load platform 12 also has a lower surface 16, visible in Fig. 1B. The surface area of the upper surface 14 and the weight of the load platform 12 can widely vary, but the issues being solved by the inventive concept come into play when the load platform becomes so large or so heavy that moving it to obtain access to the footprint becomes unwieldy or unsafe. Based on that, a typical range for the surface area where the inventive concept would be employed would be from about 400 in² to about 5000 in². If such a load platform 12 is a solid metal plate, a reasonable weight range would then be typically in the range of from about 120 to about 600 lb. Alternate solutions exist for providing cleaning access to a floor scale 10 when the load platform 12 is significantly outside those ranges, although the inventive concept is by no means limited to the surface area and weight ranges.

Although subsequent figures will describe the features of the inventive concept in more detail, Figs. 1A and 1B clearly demonstrate the movement of the load platform 12 as it is moved from the operative position of weighing a load (Fig. 1A) to a raised, non-operative position (Fig. 1B) in which the footprint F is accessible for cleaning. A periphery of the load platform 12 is surrounded by a frame 18 that supports the load platform when the load platform is being raised or lowered or is in the non-operative position. When in the operative position, the load platform 12 is maintained above the floor, but load cells are interposed between the load platform and the floor. The movement from the operative position to the non-operative position, shown in Figs. 1A and 1B, is a pivoting movement about an axis A established at a rear portion of the floor scale 10.

Additional features of the frame 18 that are visible in Figs. 1A and 1B include a front frame member 20, a rear frame member 22 and a pair of side frame members 24.

The floor scale 10 also has a pair of foot assemblies 26, each of which is connected to the frame 18 for pivoting the load platform 12 about an axis A at a rear portion of the frame. The foot assemblies 26 are not very distinguishable from the frame 18 in Fig. 1A, but they are quite clearly seen once the load platform 12 is in the raised, non-operative position of Fig. 1B. Each foot assembly 26 comprises a first foot 28, connected to the frame 18 near the rear edge of the frame, establishing the axis A for pivoting the frame, a second foot 30, and a cylindrical bar 32. The first foot 28 and the second foot 30 are spaced apart from each other and held in that relationship by the cylindrical bar 32. Further, each of the feet 28, 30 are preferably adapted to be anchored to the floor by an appropriate means for anchoring, such as a threaded bolt. The cylindrical bar 32 is offset from the floor and is parallel to one of the side frame members 24 when the load platform 10 is in the operative position. By offsetting the bar 32 and making it cylindrical, the surfaces of it are accessible for cleaning and by having no horizontal concave surfaces, there is little or no ability for liquids to pool. Minimizing exposed horizontal concave surfaces is considered a feature of the inventive concept. Although described as a "bar," cylindrical bar 32 can be a tubular element and still perform its intended function.

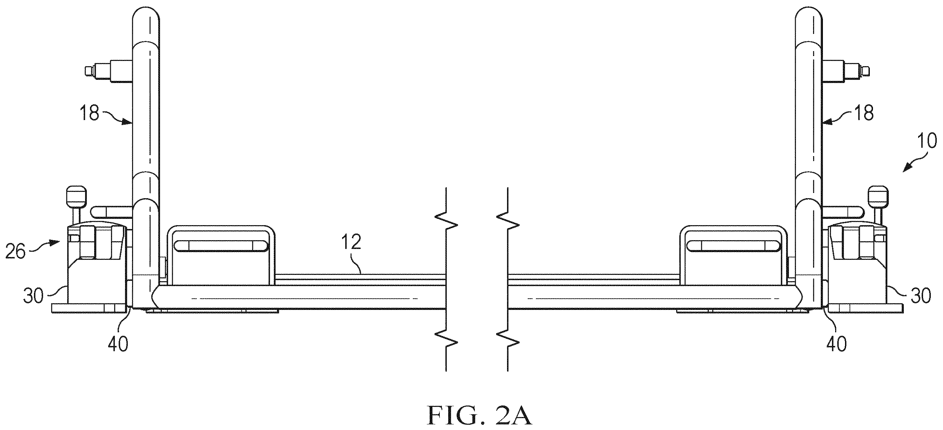

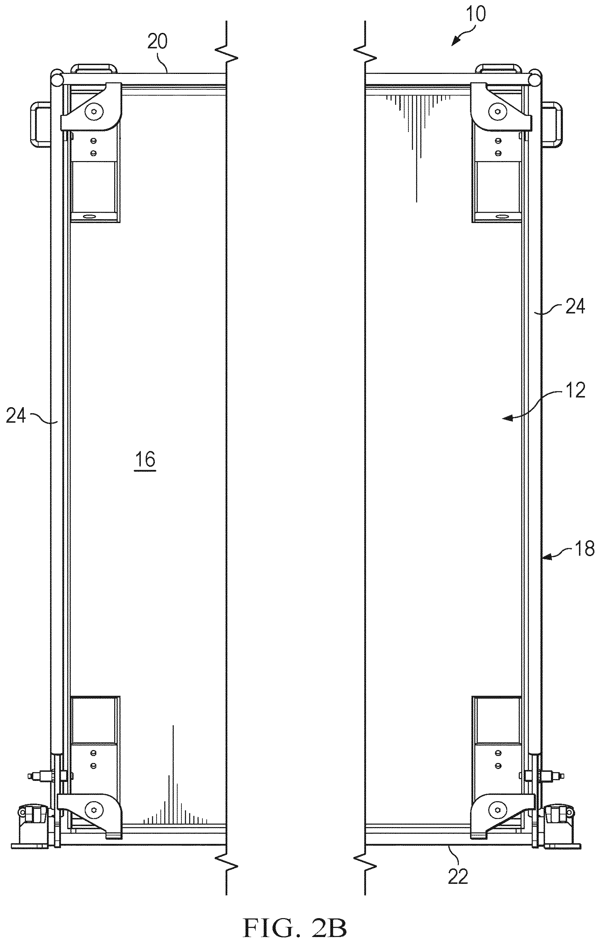

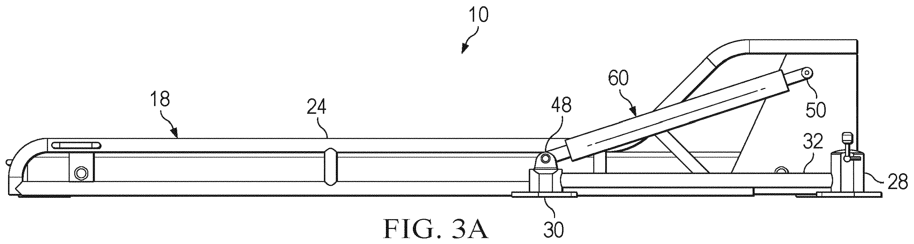

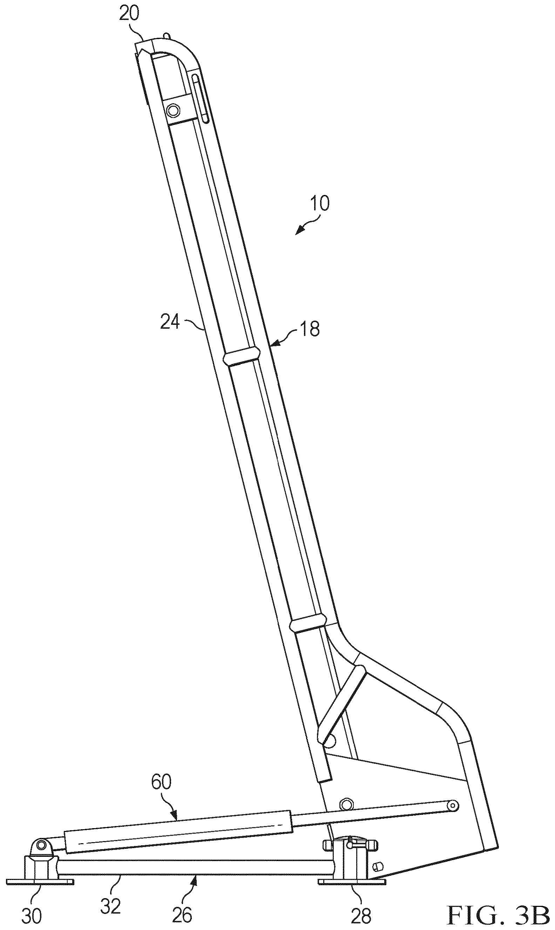

Moving now to **FIGS. 2A** and **2B****,** front elevation views of the floor scale 10 are shown. Fig. 2A shows the floor scale 10 in the operative position; Fig. 2B shows the floor scale in the raised position. Because a central portion of the width lacks any characterizing features, a portion of the width is not shown. **FIG. 3A** and **3B** are right-side elevation views of the floor scale, with Fig. 3A showing the floor scale 10 in the operative position and Fig. 3B showing the floor scale in the raised position. In the embodiment presented, floor scale 10 has side frame members 24 that extend in the front-to-rear dimension more than twice the separation of the first foot 28 from the second foot 30 in the same direction. As seen in Fig. 3B, this particular embodiment will position a vertical projection of the center of mass borne by the frame 18 within the front-to-rear length of each foot assembly 26. However, a more important characteristic of each foot assembly 26 is providing a secure purchase of the floor through a means for anchoring, especially a robust fastener. This characteristic is balanced with the additional concern in minimizing the front-to-rear length of the foot assembly 26, as it can present a tripping hazard when the floor scale 10 is in the raised position.

Although shown to some extent in Fig. 1B, Fig. 2B provides additional insight to the structure of the frame 18 provided by the respective frame members 20, 22, 24. Each side frame member 24 is attached to the respective front and rear frame members 20, 22. The respective attachments may be preferred to be made by welding. When assembled, the frame 18 surrounds a periphery of the load platform 12, so the frame is rectangular, and preferably square, just as at the load platform is. As seen to a certain extent in Fig. 1B, but even better in Fig. 2B, each of the corners of the frame 18 has a plate 34 intended for receiving the weight of the load platform 12. Using known technology in the art, a load cell (not shown) may be mounted in the load platform 12 so that a rocker pin (not shown) and receiver (not shown) can act through an aperture 36 in the plate 34 to impose strain on the load cell, but only when the floor scale 10 is in the operative position. As the frame 18 is raised, the receiver loses its contact with the floor and ceases to act on the load cell, although the weight of the load platform still bears upon the plate 34.

The various views depict several features of the pair of side frame members 24. Whereas the front and rear frame members 20, 22 are depicted as single cylindrical bars, or, as noted, cylindrical tubes, each side frame member 24 comprises a plurality of cylindrical bars or tubes, as well as a vertical plate 38. The arrangement of the cylindrical bars or tubes is intended at providing a rigid vertical truss having a light weight, with structural members that are easily cleaned and which do not provide concave horizontal surfaces that would allow liquids to accumulate.

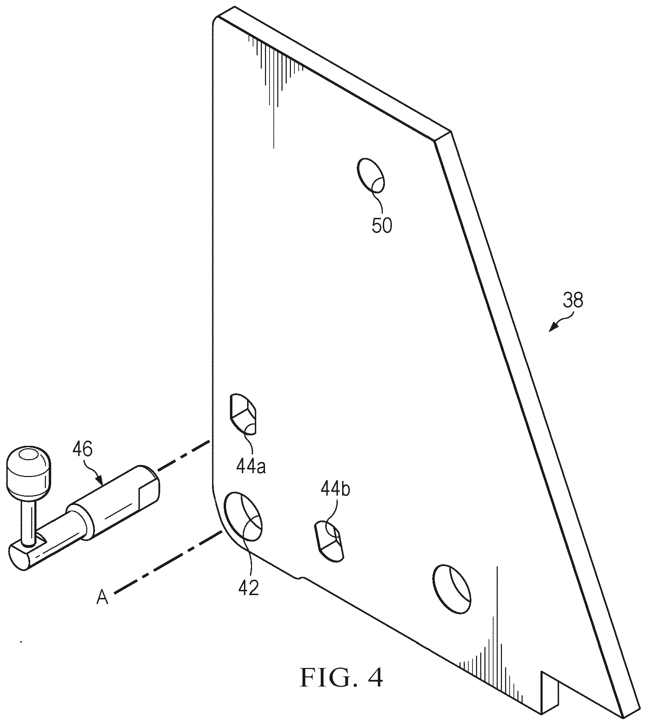

A vertical enlargement of each side frame member 24 may be achieved with the use of a vertical plate 38, as seen not only in Figs. 3A and 3B, but also in Fig. 4. The vertical plate 38 is an important aspect of providing the pivoting movement of the frame 18 relative to the foot assemblies 26. The axis A for the pivoting movement is preferably provided by the rear frame member 22 or an extension thereof. An aperture 40 in the first foot of each foot assembly 26 receives an end of the rear frame member 22. Vertical plate 38 is shown as having a corresponding aperture 42, although an alternative solution would be to substitute a trunnion that protrudes horizontally into aperture 40 to establish the axis A. In many embodiments of the inventive concept, at least two further apertures 44 are provided in the vertical plate 38. A first of these, denominated 44a in Fig. 4, is vertically above axis A, represents a hole for receiving a locking pin 46 when the load platform is in the operative position. There should be at least one further aperture, denominated 44b, for receiving the locking pin 46 when the load platform is in at least one raised non-operative position. These apertures 44a, 44b will be; located along an arc at a selected radius R from the axis A. A locking pin 46 would preferably be located in a vertical extension of the first foot 28 and would preferably be spring-loaded to bias the pin into the apertures 44 as encountered during the pivoting movement of the frame 18.

In moving the frame 18 between the operative and non-operative positions, it is highly desirable to apply torque to the frame above the axis A. It is also desirable to be able to use a means 60 for applying torque to slow the return to the operative position from the raised non-operative position. A first point 48 for anchoring such a means for applying torque would be preferably located on the second foot 30. A second point 50 for anchoring would preferably be located high on the vertical plate 38. These anchor points 48, 50 may be provided by an aperture or a protruding pin. In some instances, the basic floor scale 10 will be provided without the means for applying torque, which may be determined by the user. In Figs. 3A and 3B show a hydraulic cylinder installed as the means 60 for applying torque. There are several other options available to control the up and down motion of the load platform, including a gas spring cylinder, and a spring-loaded cylinder driven by a servo motor.

### Reference numerals

- 10: floor scale
- 12: load platform
- 14: upper surface of the load platform
- 16: lower surface of the load platform
- 18: frame
- 20: front frame member
- 22: rear frame member
- 24: side frame member
- 26: foot assemblies
- 28: first foot
- 30: second foot
- 32: cylindrical bar
- 34: corner plate of frame
- 36: aperture of corner plate
- 38: vertical plate of side frame member
- 40: aperture in first foot to receive rear frame member or trunnion
- 42: aperture through vertical plate or trunnion
- 44a: first aperture in vertical plate for locking pin
- 44b: second aperture in vertical plate for locking pin
- 46: locking pin
- 48: anchor point
- 50: anchor point
- 60: means for applying torque
- A: axis for pivoting the load platform and frame
- F: footprint of the floor scale on the floor

## Claims

1. A floor scale (10), configured to allow cleaning of both the floor scale and a footprint (F) of the floor scale on a floor on which the floor scale is arranged, comprising:
a load platform (12) having an upper surface (14) for receiving a load to be weighed;
a frame (18) supporting the load platform (12) above the floor; and
a pair of foot assemblies (26), each of which is connected to the frame (18) for pivoting the load platform (12) about an axis (A) between an operative position in which the upper surface (14) is substantially parallel to the floor and a non-operative position in which the upper surface is angled obliquely relative to the floor,
wherein the frame (18) comprises:
a rear frame member (22);
a pair of side frame members (24), each of which is attached to opposite ends of the rear frame member, wherein the rear frame member (22) forms a rear edge of the frame and the pair of side frame members (24) form side edges of the frame;
a front frame member (20), wherein each side frame member of the pair of side frame members (24) is attached to the respective front and rear frame members (20, 22) to define a rectangular frame having front, rear and side edges and four corners;
**characterized in that**:
the front and rear frame members (20, 22) comprise bars and the side frame members (24) comprise bars and vertical plates (38); and **in that**
the frame (18) comprises a plate (34), at a lower portion of each of the four corners, upon which the load platform (12) bears.

2. The floor scale (10) of claim 1, wherein the load platform (12) is rectangular, and, preferably, square.

3. The floor scale (10) of claim 2, wherein the load platform (12) comprises a rectangular solid wherein the upper surface (14) has an area of from about 400 to about 5000 in² and the load platform weighs from about 120 to about 600 lb.

4. The floor scale (10) of claim 2, wherein the frame (18) surrounds a periphery of the load platform (12) so that the frame is rectangular just as the load platform is

5. The floor scale (10) of one of claims 1-4, wherein the plates (34) upon which the load platform (12) bears, comprise an aperture (36) establishing a force communication with the floor only when the load platform is in the operative position;
wherein the front and rear frame members (20, 22) comprise cylindrical bars and the side frame members (24) comprise cylindrical bars and the vertical plates (38), thereby minimizing concave horizontal surfaces that would allow accumulation of liquids.

6. The floor scale (10) of one of claims 1-5, wherein each of the foot assemblies (26) comprises:
a first foot (28), connected to the frame (18) near the rear edge of the frame (18), establishing the axis (A) for pivoting the frame;
a second foot (30), spaced apart from the first foot (28); and
a bar (32), offset from the floor and aligned along the corresponding side edge of the frame, holding the first foot and the second foot in fixed spaced-apart relationship.

7. The floor scale (10) of claim 6, wherein:
each first foot (28) and second foot (30) is adapted to be anchored to the floor by a means for fastening.

8. The floor scale (10) of claim 6 or 7, wherein, for each of the foot assemblies (26):
the second foot (30) and the corresponding side frame member (24) provide anchor points (48, 50) for applying torque to the frame (18) above the axis (A).

9. The floor scale (10) of one of claims 1-8, further comprising:
a means for locking the load platform (12) in the operative position and in at least one non-operative position.

10. The floor scale (10) of claim 9 when dependent upon one of claims 6-8, wherein the means for locking comprises:
a spring-loaded locking pin (46) arranged in the first foot (28); and
at least two apertures (44a, 44b) in the corresponding side frame member (24), the first of the apertures positioned to receive the locking pin when the load platform (12) is in the operative position and each of the further apertures positioned to receive the locking pin when the load platform is in one of the at least one non-operative positions.

11. The floor scale (10) of one of claims 6-8, 9 when dependent upon one of claims 6-8, and 10, further comprising:
for each foot assembly (26), a hydraulic cylinder (60) having a first end mounted to the second foot (30) and a second end mounted to the corresponding side frame member (24).

12. The floor scale (10) of claim 11, wherein:
a rod/piston of the hydraulic cylinder (60) is in a retracted position when the load platform (12) is in the operative position and in an extended position when the load platform is in the non-operative position.

13. The floor scale (10) of claim 11 or 12, wherein a cylinder body of the hydraulic cylinder (60) is mounted to the second foot (30).

14. The floor scale (10) of one of claims 1-13, wherein all surfaces of the frame (18) and foot assemblies (26) are devoid of concave horizontal surfaces.

## Patentansprüche

1. Bodenwaage (10), die so konfiguriert ist, dass sowohl die Bodenwaage als auch eine Standfläche (F) der Bodenwaage auf einem Boden, auf dem die Bodenwaage angeordnet ist, gereinigt werden können, umfassend:
eine Lastplattform (12) mit einer oberen Fläche (14) zur Aufnahme einer zu wiegenden Last;
einen Rahmen (18), der die Lastplattform (12) über dem Boden trägt; und
ein Paar Fußbaugruppen (26), von denen jede mit dem Rahmen (18) verbunden ist, um die Lastplattform (12) um eine Achse (A) zwischen einer Betriebsstellung, in der die obere Fläche (14) im Wesentlichen parallel zum Boden ist, und einer Nicht-Betriebsstellung, in der die obere Fläche schräg zum Boden abgewinkelt ist, zu schwenken, wobei der Rahmen (18) Folgendes umfasst:
ein hinteres Rahmenelement (22);
ein Paar Seitenrahmenelemente (24), von denen jedes an gegenüberliegenden Enden des hinteren Rahmenelements befestigt ist, wobei das hintere Rahmenelement (22) einen hinteren Rand des Rahmens bildet und das Paar Seitenrahmenelemente (24) Seitenränder des Rahmens bilden;
ein vorderes Rahmenelement (20), wobei jedes Seitenrahmenelement des Paares Seitenrahmenelemente (24) am vorderen und hinteren Rahmenelement (20, 22) befestigt ist, um einen rechteckigen Rahmen mit vorderem, hinterem und seitlichem Rand und vier Ecken zu definieren;
**dadurch gekennzeichnet, dass**:
das vordere und hintere Rahmenelement (20, 22) Stangen umfassen und die Seitenrahmenelemente (24) Stangen und vertikale Platten (38) umfassen; und dass
der Rahmen (18) an einem unteren Abschnitt jeder der vier Ecken eine Platte (34) umfasst, die die Lastplattform (12) trägt.

2. Bodenwaage (10) nach Anspruch 1, wobei die Lastplattform (12) rechteckig und vorzugsweise quadratisch ist.

3. Bodenwaage (10) nach Anspruch 2, wobei die Lastplattform (12) einen rechteckigen Körper umfasst, wobei die obere Fläche (14) eine Fläche von etwa 400 bis etwa 5000 in² aufweist und die Lastplattform etwa 120 bis etwa 600 lb wiegt.

4. Bodenwaage (10) nach Anspruch 2, wobei der Rahmen (18) eine Peripherie der Lastplattform (12) umgibt, so dass der Rahmen rechteckig ist, genau wie die Lastplattform.

5. Bodenwaage (10) nach einem der Ansprüche 1-4, wobei die Platten (34), die die Lastplattform (12) tragen, eine Öffnung (36) umfassen, die nur dann eine kraftübertragende Verbindung mit dem Boden ermöglicht, wenn sich die Lastplattform in der Betriebsstellung befindet;
wobei das vordere und hintere Rahmenelement (20, 22) zylindrische Stangen umfassen und die Seitenrahmenelemente (24) zylindrische Stangen und die vertikalen Platten (38) umfassen, wodurch konkave horizontale Flächen minimiert werden, die die Ansammlung von Flüssigkeiten ermöglichen würden.

6. Bodenwaage (10) nach einem der Ansprüche 1-5, wobei jede der Fußbaugruppen (26) Folgendes umfasst:
einen ersten Fuß (28), der mit dem Rahmen (18) nahe dem hinteren Rand des Rahmens (18) verbunden ist und die Achse (A) zum Schwenken des Rahmens definiert;
einen zweiten Fuß (30), der vom ersten Fuß (28) beabstandet ist; und
eine Stange (32), die vom Boden versetzt und entlang der entsprechenden Seitenkante des Rahmens ausgerichtet ist und den ersten Fuß und den zweiten Fuß in fester, beabstandeter Beziehung hält.

7. Bodenwaage (10) nach Anspruch 6, wobei:
jeder erste Fuß (28) und zweite Fuß (30) eingerichtet ist, mittels eines Befestigungsmittels am Boden verankert zu werden.

8. Bodenwaage (10) nach Anspruch 6 oder 7, wobei für jede der Fußbaugruppen (26):
der zweite Fuß (30) und das entsprechende Seitenrahmenelement (24) Ankerpunkte (48, 50) zum Anlegen eines Drehmoments an den Rahmen (18) um die Achse (A) bereitstellen.

9. Bodenwaage (10) nach einem der Ansprüche 1-8, ferner umfassend:
ein Mittel zum Verriegeln der Lastplattform (12) in der Betriebsstellung und in wenigstens einer Nicht-Betriebsstellung.

10. Bodenwaage (10) nach Anspruch 9, wenn abhängig von einem der Ansprüche 6-8, wobei das Mittel zum Verriegeln Folgendes umfasst:
einen federbelasteten Verriegelungsstift (46), der im ersten Fuß (28) angeordnet ist; und
wenigstens zwei Öffnungen (44a, 44b) im entsprechenden Seitenrahmenelement (24),
wobei die erste der Öffnungen so positioniert ist, dass sie den Verriegelungsstift aufnimmt, wenn sich die Lastplattform (12) in der Betriebsstellung befindet, und jede der weiteren Öffnungen so positioniert ist, dass sie den Verriegelungsstift aufnimmt, wenn sich die Lastplattform in einer der wenigstens einen Nicht-Betriebsstellung befindet.

11. Bodenwaage (10) nach einem der Ansprüche 6-8, 9, wenn abhängig von einem der Ansprüche 6-8, und 10, ferner umfassend:
für jede Fußbaugruppe (26) einen Hydraulikzylinder (60) mit einem ersten Ende, das am zweiten Fuß (30) montiert ist, und einem zweiten Ende, das am entsprechenden Seitenrahmenelement (24) montiert ist.

12. Bodenwaage (10) nach Anspruch 11, wobei:
eine Stange/ein Kolben des Hydraulikzylinders (60) in einer eingefahrenen Position ist, wenn sich die Lastplattform (12) in der Betriebsstellung befindet, und in einer ausgefahrenen Position, wenn sich die Lastplattform in der Nicht-Betriebsstellung befindet.

13. Bodenwaage (10) nach Anspruch 11 oder 12, wobei ein Zylinderkörper des Hydraulikzylinders (60) am zweiten Fuß (30) montiert ist.

14. Bodenwaage (10) nach einem der Ansprüche 1-13, wobei alle Oberflächen des Rahmens (18) und der Fußanordnungen (26) frei von konkaven horizontalen Flächen sind.

## Revendications

1. Balance au sol (10), conçue pour permettre le nettoyage de la balance au sol et d'une empreinte (F) de la balance au sol sur un sol sur lequel la balance au sol est disposée, comprenant :
une plate-forme de charge (12) ayant une surface supérieure (14) destinée à recevoir une charge à peser ;
un cadre (18) soutenant la plate-forme de charge (12) au-dessus du sol ; et
une paire d'ensembles de pieds (26), dont chacun est relié au cadre (18) pour faire pivoter la plate-forme de charge (12) autour d'un axe (A) entre une position opérationnelle dans laquelle la surface supérieure (14) est sensiblement parallèle au sol et une position non opérationnelle dans laquelle la surface supérieure est inclinée obliquement par rapport au sol,
le cadre (18) comprenant :
un élément de cadre arrière (22) ;
une paire d'éléments de cadre latéraux (24), dont chacun est fixé à des extrémités opposées de l'élément de cadre arrière, l'élément de cadre arrière (22) formant un bord arrière du cadre et la paire d'éléments de cadre latéraux (24) formant des bords latéraux du cadre ;
un élément de cadre avant (20), chaque élément de cadre latéral de la paire d'éléments de cadre latéraux (24) étant fixé à l'élément de cadre avant (20) et à l'élément de cadre arrière (22) afin de définir un cadre rectangulaire ayant des bords avant, arrière et latéraux et quatre coins ;
**caractérisée en ce que** :
l'élément de cadre avant (20) et l'élément de cadre arrière (22) comprennent des barres et les éléments de cadre latéraux (24) comprennent des barres et des plaques verticales (38) ; et **en ce que**
le cadre (18) comprend une plaque (34), au niveau d'une partie inférieure de chacun des quatre coins, qui porte la plate-forme de charge (12).

2. Balance au sol (10) selon la revendication 1, dans laquelle la plate-forme de charge (12) est rectangulaire et, de préférence, carrée.

3. Balance au sol (10) selon la revendication 2, dans laquelle la plate-forme de charge (12) comprend un solide rectangulaire, la surface supérieure (14) a une superficie d'environ 400 à environ 5 000 pouces² et la plate-forme de charge pèse d'environ 120 à environ 600 livres.

4. Balance au sol (10) selon la revendication 2, dans laquelle le cadre (18) entoure une périphérie de la plate-forme de charge (12) de sorte que le cadre est rectangulaire tout comme la plate-forme de charge.

5. Balance au sol (10) selon l'une quelconque des revendications 1 à 4, dans laquelle les plaques (34) qui portent la plate-forme de charge (12) comprennent une ouverture (36) qui permet une liaison de transmission de puissance avec le sol uniquement lorsque la plate-forme de charge se trouve dans la position opérationnelle ; et
dans laquelle l'élément de cadre avant (20) et l'élément de cadre arrière (22) comprennent des barres cylindriques et les éléments de cadre latéraux (24) comprennent des barres cylindriques et les plaques verticales (38), minimisant ainsi des surfaces horizontales concaves qui permettraient l'accumulation de liquides.

6. Balance au sol (10) selon l'une quelconque des revendications 1 à 5, dans laquelle chacun des ensembles de pieds (26) comprend :
un premier pied (28), relié au cadre (18) à proximité du bord arrière du cadre (18), qui définit l'axe (A) de pivotement du cadre ;
un second pied (30), espacé du premier pied (28) ; et
une barre (32), décalée par rapport au sol et alignée le long du bord latéral correspondant du cadre, qui maintient le premier pied et le second pied dans une relation d'espacement fixe.

7. Balance au sol (10) selon la revendication 6, dans laquelle :
chaque premier pied (28) et chaque second pied (30) sont adaptés pour être ancrés au sol par un moyen de fixation.

8. Balance au sol (10) selon la revendication 6 ou 7, dans laquelle, pour chacun des ensembles de pieds (26) :
le second pied (30) et l'élément de cadre latéral (24) correspondant fournissent des points d'ancrage (48, 50) destinés à appliquer un couple au cadre (18) autour de l'axe (A).

9. Balance au sol (10) selon l'une quelconque des revendications 1 à 8, comprenant en outre :
un moyen destiné à verrouiller la plate-forme de charge (12) dans la position opérationnelle et dans au moins une position non opérationnelle.

10. Balance au sol (10) selon la revendication 9, lorsqu'elle dépend de l'une quelconque des revendications 6 à 8, dans laquelle le moyen de verrouillage comprend :
une goupille de verrouillage à ressort (46) disposée dans le premier pied (28) ; et
au moins deux ouvertures (44a, 44b) dans l'élément de cadre latéral (24) correspondant, la première des ouvertures étant positionnée de sorte à recevoir la goupille de verrouillage lorsque la plate-forme de charge (12) se trouve dans la position opérationnelle et chacune des autres ouvertures étant positionnée de sorte à recevoir la goupille de verrouillage lorsque la plate-forme de charge se trouve dans l'une de l'au moins une position non opérationnelle.

11. Balance au sol (10) selon l'une quelconque des revendications 6 à 8 et 9 lorsqu'elle dépend de l'une quelconque des revendications 6 à 8 et 10, comprenant en outre :
pour chaque ensemble de pieds (26), un vérin hydraulique (60) ayant une première extrémité montée sur le second pied (30) et une seconde extrémité montée sur l'élément de cadre latéral (24) correspondant.

12. Balance au sol (10) selon la revendication 11, dans laquelle :
une tige/un piston du vérin hydraulique (60) se trouve dans une position rétractée lorsque la plate-forme de charge (12) se trouve dans la position opérationnelle et dans une position étendue lorsque la plate-forme de charge se trouve dans la position non opérationnelle.

13. Balance au sol (10) selon la revendication 11 ou 12, dans laquelle un corps de vérin du vérin hydraulique (60) est monté sur le second pied (30).

14. Balance au sol (10) selon l'une quelconque des revendications 1 à 13, dans laquelle toutes les surfaces du cadre (18) et des ensembles de pieds (26) sont dépourvues de surfaces horizontales concaves.
